# EUROPÄISCHE PATENTANMELDUNG

(11) **EP 2 524 793 A2**
(43) Veröffentlichungstag der Anmeldung: **21.11.2012**
(21) Anmeldenummer: 12165498.2
(22) Anmeldetag: 25.04.2012
(51) Int. Cl.: B29C 49/42, F02B 63/04, F02G 5/00, F24D 12/00

(54) **Vorrichtung und Verfahren zum Herstellen von Kunststoffbehältern aus Vorformlingen**

(30) Priorität: 17.05.2011 DE 102011075958
(71) Anmelder: Krones AG, 93073 Neutraubling (DE)
(72) Erfinder: Preiss, Johannes, 93055 Regensburg (DE); Link, Albert, 84072 Au i.d.Hallertau (DE); Wasmuht, Klaus, 91792 Ellingen (DE)
(74) Vertreter: Grünecker, Kinkeldey, Stockmair & Schwanhäusser

(57) **Zusammenfassung**

Beschrieben werden eine Vorrichtung und ein Verfahren zum Herstellen von Kunststoffbehältern aus Vorformlingen. Dadurch, dass eine Kraft-Wärme-Kopplungseinrichtung zum Erzeugen elektrischer Energie für den Betrieb einer Blasstation, zum Erzeugen thermischer Energie für das Beheizen eines Ofens und zum Kühlen der Blasformen vorgesehen ist, kann ein hoher Anteil der primär eingesetzten Energie für den Produktionsprozess genutzt werden.

## Beschreibung

Die Erfindung betrifft eine Vorrichtung zum Herstellen von Kunststoffbehältern aus Vorformlingen nach dem Oberbegriff des Anspruchs 1 sowie ein entsprechendes Verfahren nach dem Oberbegriff des Anspruchs 11.

Kunststoffbehälter für Lebensmittel oder pharmazeutische Produkte können bekanntermaßen in Blasmaschinen, insbesondere in Streckblasmaschinen, hergestellt werden, wobei im Spritzguss hergestellte Vorformlinge zunächst in einem Ofen erwärmt werden, bevor sie in einer zugeordneten Blasstation mit Hilfe von Überdruck in ihre endgültige Form gebracht werden. Nachteilig an diesem Verfahren ist der hohe Verbrauch an thermischer und elektrischer Energie für das Beheizen der Vorformlinge, für den Antrieb der Blasmaschine und die Herstellung der Druckluft. Es wurden daher bereits verschiedene Versuche unternommen, den Energieeinsatz bei der Herstellung von Kunststoffbehältern nach dem Blas- oder Streckblasverfahren zu optimieren.

Beispielsweise beschreibt die DE 10 2009 009867 A1 eine Heizeinrichtung zum Erwärmen von Vorformlingen, an der mit Gas betriebene Heizelemente vorgesehen sind. Als Vorteile werden dabei der vergleichsweise hohe energetische Wirkungsgrad genannt sowie der vergleichsweise kostengünstige Energieträger.

Die WO 2007/017429 A2 beschreibt eine Reduzierung der Energiekosten durch Rückführung und Wandlung pneumatischer Energie aus Druckluft, die nach dem Blasen der Behälter aus den jeweiligen Blasformen zwangsläufig abgelassen werden muss.

Die JP-2001-0500454 A beschreibt die Rückführung von Dampf und heißem Wasser in einer Spritzgussmaschine, um durch die Rückführung gewonnene Energie zum Kühlen und/oder Antreiben der Maschine einzusetzen.

Es wäre jedoch wünschenswert, gerade die bei der Herstellung von Kunststoffbehältern in Blasmaschinen zugeführte Energie effizienter zu nutzen.

Die gestellte Aufgabe wird gelöst mit einer Vorrichtung nach Anspruch 1. Demnach umfasst die Vorrichtung neben mindestens einem Ofen zum Aufheizen der Vorformlinge und mindestens einer Blasstation zum Blasen der Kunststoffbehälter eine Kraft-Wärme-Kopplungseinrichtung zum Erzeugen elektrischer Energie zumindest für den Antrieb der Blasstation und zum Erzeugen thermischer Energie zumindest für das Beheizen des Ofens. Da in der erfindungsgemäßen Vorrichtung sowohl thermische Energie als auch elektrische Energie direkt vor Ort benötigt wird, lässt sich eine Kraft-Wärme-Kopplung besonders vorteilhaft einsetzen. Dies trifft insbesondere deshalb zu, da der Bedarf an Wärmeenergie und an elektrischer Energie während des normalen Betriebs einer Blasmaschine nahezu konstant bleibt, so dass die zur Verfügung stehenden Mengen an elektrischer und thermischer Energie aus der Kraft-Wärme-Kopplungseinrichtung kontinuierlich für die Produktion verwendet werden können. Außerdem lässt sich die Leistung der Kraft-Wärme-Kopplung somit gut an die Leistungswerte der zu versorgenden Anlagenkomponenten anpassen.

Hierbei versteht es sich von selbst, dass der thermische Energiebedarf und der elektrische Energiebedarf der erfindungsgemäßen Vorrichtung nicht ausschließlich von der gemeinsamen Kraft-Wärme-Kopplungseinrichtung gedeckt werden müssen. Je nach Dimensionierung der erfindungsgemäßen Vorrichtung oder deren Auslastung können die thermische Energie zum Beheizen des Ofens und/oder die elektrische Energie für den Antrieb der Blasstation ergänzend von einer anderen Energiequelle geliefert werden, beispielsweise aus dem öffentlichen Stromnetz. Beispielsweise könnte die erfindungsgemäße Vorrichtung wärmegeführt betrieben werden, so dass die Kraft-Wärme-Kopplungseinrichtung im Wesentlichen gerade die für das Erhitzen der Vorformlinge benötigte thermische Energie bereitstellt und ein gegebenenfalls für den Betrieb der Blasstation zusätzlich benötigter Anteil der elektrischen Energie von außen ergänzt wird.

Es wäre aber auch denkbar, die Kraft-Wärme-Kopplungseinrichtung stromgeführt zu betreiben, so dass der elektrische Energiebedarf der Blasstation und gegebenenfalls weiterer Anlagenkomponenten der erfindungsgemäßen Vorrichtung gerade gedeckt wird und ein thermischer Energieüberschuss an anderer Stelle verwertet wird. Ebenso wäre es denkbar, dass der Ofen dann bei Bedarf von einer zusätzlichen Heizeinrichtung ergänzend beheizt wird, also insbesondere falls die von der Kraft-Wärme-Kopplungseinrichtung gelieferte Menge an thermischer Energie für das Aufheizen der Vorformlinge nicht ausreicht. Der Betrieb der Blasstation kann die Energieversorgung von Antrieben sowie das Erzeugen und/oder Bereitstellen von Medien, wie beispielsweise Druckluft, einschließen.

Vorzugsweise umfasst der Ofen mindestens einen mit thermischer Energie betriebenen Wärmestrahler, um die Vorformlinge mit Wärmestrahlung aufzuheizen. Dies ermöglicht eine für die Herstellung besonders günstige berührungslose Vorwärme der Vorformlinge mit Wärmestrahlung. Unter einem Betrieb mit thermischer Energie ist hierbei die Wärmeübertragung durch Konvektion und Wärmeleitung mit einem geeigneten Fluid zu verstehen, so dass Abwärme der Kraft-Wärme-Kopplungseinrichtung ohne Energiewandlung, wie beispielsweise in elektrische Energie, zum Ofen übertragen und in diesem in Wärmestrahlung umgewandelt werden kann. Bei einer besonders günstigen Ausgestaltung umfasst der Wärmestrahler einen Strahlerkörper, insbesondere aus Speckstein oder Schamottstein, sowie einen thermisch an diesen gekoppelten Wärmetauscher, insbesondere mindestens ein in den Strahlerkörper eingebettetes Wärmetauscherrohr, um die thermische Energie an den Wärmestrahler zu übertragen. Dies ermöglicht eine besonders effektive Wärmeübertragung und Energiewandlung sowie einen gleichmäßig abstrahlenden Wärmestrahler.

Vorzugsweise umfasst der Wärmestrahler mindestens ein den aufzuheizenden Vorformlingen zugewandtes Wärmetauscherrohr zur Erzeugung der Wärmestrahlung. Ein derartiger Wärmestrahler lässt sich besonders einfach herstellen. Außerdem ermöglicht er eine örtlich besonders genau zu dosierende Energiewandlung und Wärmeabgabe.

Vorzugsweise ist die Kraft-Wärme-Kopplungseinrichtung mit dem Ofen über eine Abwärmeleitung verbunden, um die thermische Energie mittels eines Fluids zu übertragen, insbesondere mittels eines Verbrennungsabgases der Kraft-Wärme-Kopplungseinrichtung. Dies ermöglicht eine räumlich flexible Anordnung der Kraft-Wärme-Kopplungseinrichtung und des Ofens zueinander. Das Fluid ermöglicht eine besonders effiziente Wärmeübertragung. Die Verwendung eines Verbrennungsabgases der Kraft-Wärme-Kopplungseinrichtung erübrigt den Einsatz eines zusätzlichen Wärmetauschers und Wärmetauschermediums. Es wäre jedoch auch möglich, an der Kraft-Wärme-Kopplungseinrichtung einen Wärmetauscher zur Kühlung von Verbrennungsabgasen vorzusehen und ein an dem Wärmetauscher erwärmtes Wärmetauschermedium durch die Abwärmeleitung zum Ofen zu leiten.

Vorzugsweise ist die Abwärmeleitung nicht länger als 20 m, insbesondere nicht länger als 10 m. Dadurch lässt sich die von der Kraft-Wärme-Kopplungseinrichtung abgeführte Wärmeenergie mit geringem Verlust in den Ofen einkoppeln. Ferner ermöglicht dies eine flexible Anordnung der einzelnen Produktionseinheiten, wie beispielsweise des Ofens, der Kraft-Wärme-Kopplungseinrichtung, Brennstofftanks und dergleichen.

Bei einer besonders günstigen Ausgestaltung umfasst die Kraft-Wärme-Kopplungseinrichtung einen Brenner, der zum Verbrennen eines zumindest anteilig aus Biomasse hergestellten Brennstoffs geeignet ist, insbesondere zum Verbrennen von Biogas. Dadurch kann der Einsatz fossiler Brennstoffe reduziert oder gar ganz vermieden werden. Dies dient nicht nur der Reduzierung des CO₂-Ausstoßes bei der Produktion der Kunststoffbehälter, sondern reduziert insbesondere dann Kosten, falls die Biomasse aus den Abfällen einer zugeordneten Produktion gewonnen werden kann. Biogas ist aus Sicht des Emissionsverhaltens besonders umweltfreundlich und lässt sich besonders einfach aus Produktionsabfällen, wie beispielsweise Produktresten oder Abwässern, herstellen.

Vorzugsweise umfasst die erfindungsgemäße Vorrichtung ferner einen Kompressor zum Erzeugen von Blasluft und/oder Steuerluft für die Blasstation, wobei die Kraft-Wärme-Kopplungseinrichtung derart ausgebildet ist, dass sie den Kompressor mit elektrischer Energie versorgen kann. Somit lässt sich der Energieaufwand für die Erzeugung von Blasluft und/oder Steuerluft zumindest anteilig aus der Kraft-Wärme-Kopplung decken. Druckluft könnte aber auch von einer separaten Einheit oder aus einem Druckluftspeicher zugeführt werden.

Vorzugsweise umfasst die erfindungsgemäße Vorrichtung ferner ein Kühlgerät zum Kühlen der Blasstation, wobei die Kraft-Wärme-Kopplungseinrichtung derart ausgebildet ist, dass sie das Kühlgerät mit elektrischer Energie versorgen kann. Alternativ kann die benötigte Kälte auch mittels einer Adsorptionskälteanlage durch die Nutzung der Abluft der Kraft-Wärme-Kopplungseinrichtung erzeugt werden. Somit kann der Energiebedarf zum Kühlen der Blasstation zumindest anteilig von der Kraft-Wärme-Kopplung gedeckt werden. Kühlmittel könnte aber auch von einer separaten Einheit zugeführt werden.

Die gestellte Aufgabe wird ferner gelöst mit einem Verfahren nach Anspruch 11. Demnach umfasst das erfindungsgemäße Verfahren die Schritte: a) Aufheizen der Vorformlinge; und b) Blasen der Kunststoffbehälter. Ferner wird elektrische Energie für das Blasen der Kunststoffbehälter und thermische Energie zum Aufheizen der Vorformlinge von einer Kraft-Wärme-Kopplungseinrichtung erzeugt. Die elektrische Energie umfasst insbesondere Energie zum Versorgen von Antrieben, wie elektrischen Motoren, und/oder zum Bereitstellen der Blasluft. Die erzeugte thermische und/oder elektrische Energie kann jeweils durch Energiezufuhr von außen oder aus Speichermedien ergänzt werden.

Vorzugsweise wird die thermische Energie mittels eines Fluids, insbesondere mittels eines Verbrennungsabgases der Kraft-Wärme-Kopplungseinrichtung übertragen.

Bei einer bevorzugten Ausgestaltung wird zumindest ein Anteil der thermischen Energie in Wärmestrahlung umgewandelt, und die Vorformlinge werden mit der Wärmestrahlung erhitzt. Darunter ist zu verstehen, dass die Wärmestrahlung direkt aus thermischer Energie gewandelt wird, ohne Zwischenwandlung in eine andere Energieform, wie beispielsweise elektrischen Strom.

Vorzugsweise wird die Kraft-Wärme-Kopplungseinrichtung mit einem zumindest anteilig aus Biomasse gewonnenen Brennstoff befeuert, insbesondere mit Biogas.

Vorzugsweise wird der Brennstoff zumindest anteilig aus Produktresten und/oder Abwasser hergestellt, insbesondere aus Produktresten und/oder Abwasser der Getränkeherstellung und/oder der Abfüllung von Getränken. Als Brennstoffe sind generell alle organischen Abfälle aus dem Getränkeherstellungsprozess denkbar, insbesondere unter Aufbereitung in einer Biogaserzeugungsanlage. Somit lässt sich für die erfindungsgemäße Vorrichtung eine gegebenenfalls unabhängige Energieversorgung bereitstellen.

Eine bevorzugte Ausführungsform der Erfindung ist in der Zeichnung dargestellt. Es zeigen:
- Fig. 1: ein Schema einer Vorrichtung zum Herstellen von Kunststoffbehältern mit den zugehörigen Energie- und Medienströmen;
- Fig. 2: eine schematische Darstellung eines Wärmestrahlers zur Bestrahlung von Vorformlingen; und
- Fig. 3: eine schematische Darstellung einer Variante des Wärmestrahlers zur Bestrahlung der Vorformlinge.

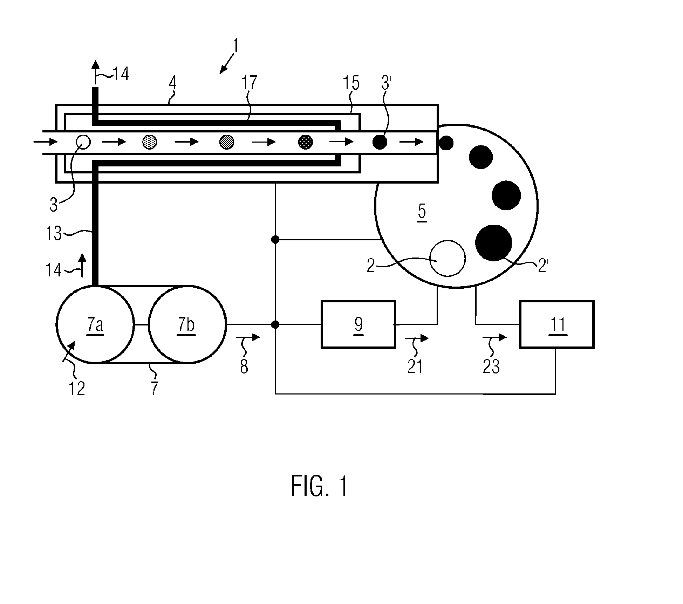

Wie die Fig. 1 erkennen lässt, umfasst die erfindungsgemäße Vorrichtung 1 zum Herstellen von Kunststoffbehältern 2, wie beispielsweise PET-Flaschen, aus Vorformlingen 3 einen Ofen 4 zum Vorwärmen der Vorformlinge 3, eine Blasstation 5 zum Blasen oder Streckblasen der Behälter 2 aus den vorgewärmten Vorformlingen 3', eine Kraft-Wärme-Kopplungseinrichtung 7 zum Erzeugen elektrischer Energie 8 für den Betrieb der Blasstation 5, eines Kompressors 9 und einer Kühleinrichtung 11. Die Kraft-Wärme-Kopplungseinrichtung 7 umfasst vorzugsweise eine mit Biogas 12 befeuerbare Gasturbine 7a oder einen anderen geeigneten Brenner sowie einen Generator 7b zur Stromerzeugung. Übergabeeinrichtungen für die Vorformlinge 3, 3' und die Behälter 2 sind der Einfachheit halber nicht dargestellt.

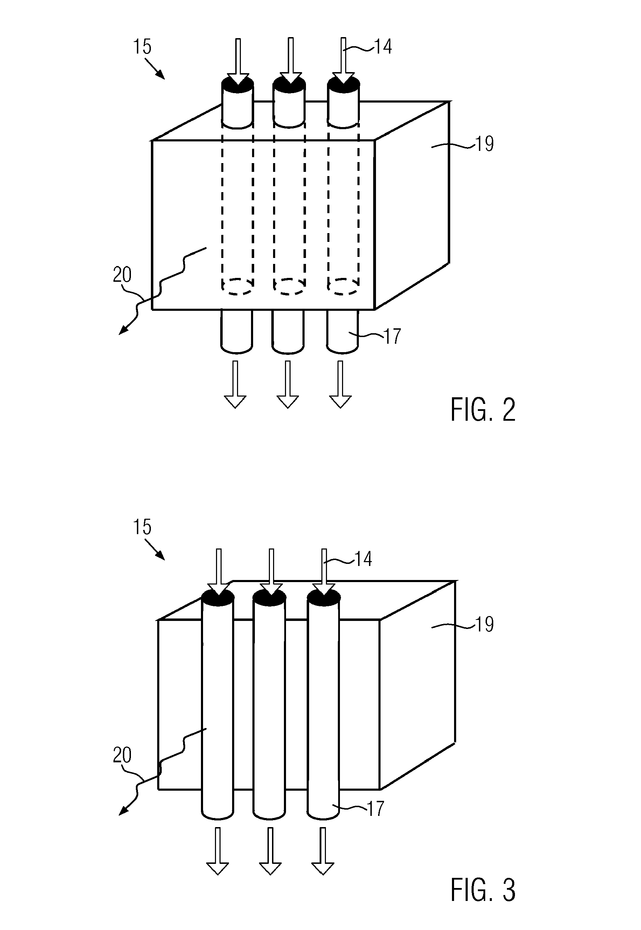

Die Kraft-Wärme-Kopplungseinrichtung 7 ist ferner mit dem Ofen 4 über eine Abwärmeleitung 13 verbunden. Durch die Abwärmeleitung 13 kann ein Wärmeübertragungsmedium 14, wie beispielsweise ein Abgas Kraft-Wärme-Kopplungseinrichtung 7 der oder ein anderes zur Wärmeübertragung geeignetes Fluid, durch den Ofen 4 geleitet werden, um mindestens einen in dem Ofen 4 vorgesehenen Wärmestrahler 15 mit Hilfe des Wärmeübertragungsmediums 14 aufzuheizen. Die Energiewandlung in eine geeignete Wärmestrahlung ist schematisch in den Fig. 2 und 3 näher erläutert.

Bei der in der Fig. 2 dargestellten Variante des Wärmestrahlers 15 umfasst dieser Wärmetauscherrohre 17, die von einem Strahlerkörper 19 umschlossen sind. Letzterer kann beispielsweise aus Speckstein oder Schamottstein bestehen. Denkbar sind jedoch auch Kombinationen dieser oder ähnlicher für die Wärmeabstrahlung geeigneter Materialien. Die Wärmetauscherrohre 17 werden von dem Wärmeübertragungsmedium 14 durchströmt und übertragen thermische Energie von dem Wärmeübertragungsmedium 14 an den Strahlerkörper 19, der sich dadurch derart erwärmt, dass er eine für die Erhitzung der Vorformlinge 3 geeignete Wärmestrahlung 20 flächig abgibt. Als Wärmestrahlung 20 eignet sich beispielsweise infrarotes Licht. In dem Strahlerkörper 19 sind den Wärmetauscherrohren 17 entsprechende Durchführungen vorgesehen, um einen effektiven Wärmeübergang zwischen dem Wärmetauscherrohren 17 und dem Strahlerkörper 19 zu ermöglichen.

Bei der in der Fig. 3 dargestellten Variante des Wärmestrahlers 15 sind die Wärmetauscherrohre 17 an der den Vorformlingen 3 zugewandten Seite des Strahlerkörpers 19 oberflächlich angebracht. In diesem Fall wirken die Wärmetauscherrohre 17 selbst als Wärmestrahler. Die Wärmetauscherrohre 17 könnten in diesem Fall in vorgegebenen Abständen derart angeordnet werden, dass ein sich vorbei bewegender und rotierender Vorformling 3 beispielsweise selektiv an umfänglichen Teilabschnitten des Vorformlings 3 unterschiedlich stark bestrahlt wird. Eine derartige Anordnung ist jedoch ebenso wie die in Fig. 3 gezeigte Anordnung lediglich beispielhaft.

Entscheidend für die in den Fig. 2 und 3 schematisch angedeuteten Varianten des Wärmestrahlers 15 ist, dass thermische Energie aus dem Wärmeübertragungsmedium 14 in den Wärmestrahler 15 eingeleitet und dort in die Wärmestrahlung 20 umgewandelt werden kann. Dies ermöglicht die berührungslose Erwärmung der Vorformlinge 3 durch die Wärmestrahlung 20. Um eine effiziente Wärmeübertragung von dem Wärmeübertragungsmedium 14 auf den Wärmestrahler 15 zu begünstigen, könnten die Wärmetauscherrohre 17 in den Wärmestrahlern 15 selbstverständlich auch Rohrbögen umfassen, um eine für die Wärmeübertragung optimierte Wärmeübertragungsstrecke bereit zu stellen.

Das Wärmeübertragungsmedium 14 ist vorzugsweise ein Verbrennungsabgas der Kraft-Wärme-Kopplungseinrichtung 7. Die Kraft-Wärme-Kopplungseinrichtung 7 basiert vorzugsweise auf einer Gasturbine 7a. Diese hat den Vorteil, dass als Brennstoff sowohl Biogas 12 als auch Erdgas eingesetzt werden kann. Somit lässt sich zumindest ein Teil des Energiebedarfs für die Kraft-Wärme-Kopplungseinrichtung bei Bedarf aus einer nichtfossilen Energiequelle decken.

Eine derartig befeuerte Kraft-Wärme-Kopplungseinrichtung 7 ist insbesondere dann von Vorteil, wenn bei der Produktion der Kunststoffbehälter 2, wie beispielsweise PET-Flaschen, oder in einer zugeordneten Produktionsanlage für Getränke organische Abfälle anfallen, aus denen ein geeigneter Brennstoff gewonnen werden kann. Es wäre dann denkbar, die Kraft-Wärme-Kopplungseinrichtung 7 in erster Linie mit Biogas 12 zu betreiben und lediglich einen jeweils zu ergänzenden Anteil der Brennstoffmenge mit einem fossilen Brennstoff zu decken.

Die Kraft-Wärme-Kopplungseinrichtung 7 ist jedoch nicht auf den Einsatz von Biogas 12 beschränkt sondern könnte auch andere umweltverträgliche organische Abfälle und/oder Öle verbrennen. Ebenso könnte ein anderes Wärmeübertragungsmedium 14 anstelle von Abgas verwendet werden. Denkbar ist ein Abgaswärmetauscher mit einem gegebenenfalls geschlossenen Wärmeübertragungskreislauf durch die Abwärmeleitung 13 für eine geeignete Flüssigkeit und/oder einen Dampf. Entscheidend ist, dass zumindest ein Teil der im Ofen 4 zum Heizen benötigten Energie von der Kraft-Wärme-Kopplungseinrichtung 7 in Form thermischer Energie zum Ofen 4 transportiert wird. Entsprechend wird eine mit Verlusten behaftete Energiewandlung, beispielsweise in elektrische Energie 8, zum Zweck des Energietransports entbehrlich. Dies steigert den energetischen Wirkungsgrad der erfindungsgemäßen Vorrichtung 1.

Je nach Auslegung der erfindungsgemäßen Vorrichtung 1 kann in dem Ofen 4 eine ergänzende Heizeinrichtung (nicht dargestellt) vorgesehen sein, um die Vorformlinge 3 und/oder die Wärmestrahler 15 bei Bedarf zusätzlich zu erwärmen. Vorzugsweise wird die Kraft-Wärme-Kopplungseinrichtung 7 jedoch so ausgelegt, dass der Ofen 4 zumindest im Normalbetrieb, also nach dem Hochfahren der Anlage, ausschließlich von der Kraft-Wärme-Kopplungseinrichtung 7 beheizt werden kann. Sollte die von der Kraft-Wärme-Kopplungseinrichtung 7 produzierte elektrische Energie 8 nicht vollständig von der Blasstation 5, dem Kompressor 9 und der Kälteanlage 11 abgenommen werden können, so kann die restliche elektrische Energiemenge anderen Prozessen zur Verfügung gestellt werden. Selbstverständlich könnte damit auch eine (nicht dargestellte) Steuereinheit betrieben werden, um die erfindungsgemäße Vorrichtung 1 oder einzelne der beschriebenen Anlagenkomponenten zu steuern.

Die erfindungsgemäße Kraft-Wärme-Kopplung lässt sich bei einer Blasmaschine besonders vorteilhaft einsetzen, da sich bei der in der Regel kontinuierlichen Auslastung einer derartigen Produktionseinheit im Wesentlichen konstante thermische und elektrische Leistungswerte einstellen. Somit lässt sich die Kraft-Wärme-Kopplungseinrichtung 7 an die Leistung der erfindungsgemäßen Vorrichtung 1 effizient anpassen.

Es wäre auch möglich, die erfindungsgemäße Vorrichtung 1, insbesondere die Kraft-Wärme-Kopplungseinrichtung 7, in ein übergeordnetes Energiemanagement einer Produktionsanlage, insbesondere einer Getränkeherstellungsanlage einzubinden. Beispielsweise könnte die Kraft-Wärme-Kopplungseinrichtung 7 mit einer Überkapazität bezogen auf die Leistung der erfindungsgemäße Vorrichtung 1 ausgelegt sein, um eine regelmäßig verfügbare Brennstoffmenge aus der Verwertung von Biomasse vollständig zu verwerten. Überschüssige thermische Energie und/oder elektrische Energie könnten dann von anderen Abnehmern in der Produktionsanlage verwertet werden. Besonders vorteilhaft wäre es jedoch, die erfindungsgemäße Vorrichtung 1 als eine bezüglich der Energieversorgung im Wesentlichen autarke Produktionseinheit auszubilden. Es wäre auch möglich Überkapazitäten durch geeignete Speichermedien zu puffern und in der erfindungsgemäßen Vorrichtung 1 zu einem späteren Zeitpunkt zu verwerten.

Der Kompressor 9 könnte sowohl Blasluft 21 zum Blasen der Behälter 2 produzieren als auch Steuerluft zum Ansteuern von pneumatischen Ventilen und dergleichen. Die Kühleinrichtung 11 dient beispielsweise dem schnellen Abkühlen der fertig geblasenen Behälter 2 und/oder der an der Blasstation 5 vorgesehenen Blasformen mit Hilfe eines Kühlmittels 23. Zur Reduzierung von Energieverlusten ist es vorteilhaft, die Kraft-Wärme-Kopplungseinrichtung 7, den Kompressor 9 und die Kühleinrichtung 11 im Bereich der Blasstation 5 und des Ofens 4 anzuordnen. Dies ermöglicht vergleichsweise kurze Leitungswege, insbesondere für das Wärmeübertragungsmedium 14 und das Kühlmittel 23. Vorzugsweise ist die Abwärmeleitung 13 nicht länger als 20 m. Bei entsprechender thermischer Isolierung sind aber auch längere Leitungsstrecken und/oder eine räumliche Trennung von Energieerzeugern und Energieabnehmern denkbar. Kurze Leitungswege wären auch für eine gegebenenfalls mit der erfindungsgemäßen Vorrichtung 1 kombinierbare Rückführung einzelner Medien (nicht gezeigt) vorteilhaft. Es versteht sich von selbst, dass der Energiebedarf der erfindungsgemäßen Vorrichtung 1 durch die Kombination der beschriebenen Kraft-Wärme-Kopplung und der Rückführung von Prozessmedien, wie beispielsweise der Blasluft 21, weiter optimiert werden kann.

Mit der erfindungsgemäßen Vorrichtung 1 kann wie folgt gearbeitet werden:
Die Kraft-Wärme-Kopplungseinrichtung 7 wird vorzugsweise mit Biogas 12, insbesondere aus der Verwertung von Produktionsabfällen, beheizt, um mit dem Stromgenerator 7b der Kraft-Wärme-Kopplungseinrichtung 7 zumindest einen Anteil an der für den Betrieb der erfindungsgemäßen Vorrichtung 1 benötigten elektrischen Energie 8 zu liefern. Die bei der Verbrennung in der Kraft-Wärme-Kopplungseinrichtung 7 erzeugte Abwärme wird mit dem Wärmeübertragungsmedium 14, insbesondere in Form eines Abgases, in der Abwärmeleitung 13 und den Wärmetauscherrohren 17 durch den Ofen 4 geleitet, um die in diesem vorgesehenen Wärmestrahler 15 mit der Abwärme zu beheizen. Die nach dem Ofen 4 im Wärmeübertragungsmedium 14' noch enthaltene Restwärme kann an anderer Stelle verwertet werden, beispielsweise in einem Schrumpftunnel einer Verpackungseinheit, oder auch gespeichert werden.

An den beheizten Wärmestrahlern 15 wird ein kontinuierlicher Strom von zu erwärmenden Vorformlingen 3 vorbei geleitet und auf eine für das nachfolgende Blasen der Behälter in der Blasstation 5 geeignete Temperatur vorgewärmt. Die für den Betrieb des Ofens 4 benötigte elektrische Energie wird vorzugsweise von dem Generator 7b erzeugt. Ebenso wird der elektrische Energiebedarf der Blasstation 5, des Kompressors 9 und der Kälteanlage 11 möglichst vollständig von der Kraft-Wärme-Kopplungseinrichtung 7 gedeckt. Alternativ kann die benötigte Kälte auch mittels einer Adsorptionskälteanlage durch die Nutung der Abluft der Kraft-Wärme-Kopplungseinrichtung erzeugt werden. Bei Bedarf wird ein zusätzlich benötigter Anteil des elektrischen Energiebedarfs aus dem Stromnetz oder einem Energiespeicher (nicht dargestellt) gedeckt. Ebenso wird bei Bedarf ein fossiler Brennstoff in der Kraft-Wärme-Kopplungseinrichtung 7 verbrannt. Überschüssige elektrische Energie wird in das Stromnetz oder die zugeordnete Produktionsanlage eingespeist oder zur späteren Verwendung gespeichert.

Die vorgewärmten Vorformlinge 3' werden in die Blasstation 5 geleitet, um die Behälter 2 durch Strecken und Blasen zu formen. Mit Hilfe der Kühleinrichtung 11 werden die geblasenen und zunächst noch heißen Behälter 2' abgekühlt, so dass die fertig geblasenen und abgekühlten Behälter 2 an eine nachgeschaltete Produktionseinheit weitergeleitet werden.

Mir der beschriebenen Vorrichtung 1 und dem entsprechenden Verfahren können Ressourcen, insbesondere Primärenergie, bei der Herstellung von Kunststoffbehältern 2, wie beispielsweise PET-Flaschen, besonders effizient und umweltschonend eingesetzt werden.

## Patentansprüche

1. Vorrichtung (1) zum Herstellen von Kunststoffbehältern (2) aus Vorformlingen (3); mit:
mindestens einem Ofen (4) zum Aufheizen der Vorformlinge (3); und
mindestens einer Blasstation (5) zum Blasen der Kunststoffbehälter (2),
**gekennzeichnet durch**
eine Kraft-Wärme-Kopplungseinrichtung (7) zum Erzeugen elektrischer Energie (8) zumindest für den Antrieb der Blasstation und zum Erzeugen thermischer Energie zumindest für das Beheizen des Ofens.

2. Vorrichtung nach Anspruch 1, wobei der Ofen (4) mindestens einen mit der thermischen Energie betriebenen Wärmestrahler (15) umfasst, um die Vorformlinge (3) mit Wärmestrahlung (20) aufzuheizen.

3. Vorrichtung nach Anspruch 2, wobei der Wärmestrahler (15) einen Strahlerkörper (19), insbesondere aus Speckstein oder Schamottstein, umfasst sowie einen thermisch an diesen gekoppelten Wärmetauscher, insbesondere mindestens ein in den Wärmestrahler eingebettetes Wärmetauscherrohr (17), um die thermische Energie an den Wärmestrahler zu übertragen.

4. Vorrichtung nach Anspruch 2 oder 3, wobei der Wärmestrahler (15) mindestens ein den aufzuheizenden Vorformlingen (3) zugewandtes Wärmetauscherrohr (17) zur Erzeugung der Wärmestrahlung (20) umfasst.

5. Vorrichtung nach wenigstens einem der vorigen Ansprüche, wobei die Kraft-Wärme-Kopplungseinrichtung (7) mit dem Ofen (4) über eine Abwärmeleitung (13) verbunden ist, um die thermische Energie mittels eines Fluids (14) zu übertragen, insbesondere mittels eines Verbrennungsabgases der Kraft-Wärme-Kopplungseinrichtung (7).

6. Vorrichtung nach Anspruch 5, wobei die Abwärmeleitung (13) nicht länger als 20 m ist, insbesondere nicht länger als 10 m.

7. Vorrichtung nach wenigstens einem der vorigen Ansprüche, wobei die Kraft-Wärme-Kopplungseinrichtung (7) einen Brenner (7a) umfasst, der zum Verbrennen eines zumindest anteilig aus Biomasse hergestellten Brennstoffs geeignet ist, insbesondere zum Verbrennen von Biogas (12).

8. Vorrichtung nach wenigstens einen der vorigen Ansprüche, ferner mit einem Kompressor (9) zum Erzeugen von Blasluft (21) und/oder Steuerluft für die Blasstation (5), wobei die Kraft-Wärme-Kopplungseinrichtung (7) derart ausgebildet ist, dass sie den Kompressor mit elektrischer Energie (8) versorgen kann.

9. Vorrichtung nach wenigstens einen der vorigen Ansprüche, ferner mit einem Kühlgerät (11) zum Kühlen der Blasstation (5), wobei die Kraft-Wärme-Kopplungseinrichtung (7) derart ausgebildet ist, dass sie das Kühlgerät mit elektrischer Energie (8) versorgen kann.

10. Vorrichtung nach wenigstens einen der vorigen Ansprüche, ferner mit einem Adsorptionskühlgerät (11) zum Kühlen der Blasstation (5), wobei die Kraft-Wärme-Kopplungseinrichtung (7) derart ausgebildet ist, dass sie das Kühlgerät mit ihrer Abwärmeleitung (13) versorgen kann.

11. Verfahren zum Herstellen von Kunststoffbehältern aus Vorformlingen; mit folgenden Schritten:
a) Aufheizen der Vorformlinge;und
b) Blasen der Kunststoffbehälter,
**dadurch gekennzeichnet, dass**
elektrische Energie für das Blasen der Kunststoffbehälter und thermische Energie zum Aufheizen der Vorformlinge von einer Kraft-Wärme-Kopplungseinrichtung erzeugt werden.

12. Verfahren nach Anspruch 11, wobei die thermische Energie mittels eines Fluids, insbesondere mittels eines Verbrennungsabgases der Kraft-Wärme-Kopplungseinrichtung übertragen wird.

13. Verfahren nach Anspruch 11 oder 12, wobei zumindest ein Anteil der thermischen Energie in Wärmestrahlung umgewandelt wird und die Vorformlinge mit der Wärmestrahlung erhitzt werden.

14. Verfahren nach wenigstens einem der Ansprüche 11 bis 13, wobei die Kraft-Wärme-Kopplungseinrichtung mit einem zumindest anteilig aus Biomasse gewonnenen Brennstoff befeuert wird, insbesondere mit Biogas.

15. Verfahren nach Anspruch 14, wobei der Brennstoff zumindest anteilig aus Abwasser hergestellt wird, insbesondere aus Abwasser der Getränkeherstellung und/oder der Abfüllung von Getränken.

16. Verfahren nach Anspruch 14 oder 15, wobei der Brennstoff zumindest anteilig aus Produktsresten hergestellt wird, insbesondere aus Produktresten der Behälterherstellung, der Getränkeherstellung und/oder der Abfüllung von Getränken.
